(19) Europäisches Patentamt
European Patent Office
Office européen des brevets

(11) **EP 3 626 999 B1**

(12) **EUROPEAN PATENT SPECIFICATION**

(45) Date of publication and mention
of the grant of the patent:
**17.11.2021 Bulletin 2021/46**

(21) Application number: **18803124.9**

(22) Date of filing: **08.05.2018**

(51) Int Cl.:
*F16G 1/28* *(2006.01)*    *B65G 15/34* *(2006.01)*
*D03D 1/00* *(2006.01)*    *D03D 15/00* *(2021.01)*
*F16G 1/14* *(2006.01)*    *D03D 15/58* *(2021.01)*
*F16G 1/10* *(2006.01)*    *F16G 1/16* *(2006.01)*

(86) International application number:
**PCT/JP2018/017800**

(87) International publication number:
**WO 2018/212019 (22.11.2018 Gazette 2018/47)**

(54) **RESIN BELT**

**HARZBAND**

**COURROIE EN RÉSINE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.05.2017 JP 2017096631**

(43) Date of publication of application:
**25.03.2020 Bulletin 2020/13**

(73) Proprietors:
• **NOK Corporation**
**Minato-ku**
**Tokyo 105-8585 (JP)**
• **Toray Industries, Inc.**
**Tokyo 103-8666 (JP)**

(72) Inventors:
• **KANEKO Takeshi**
**Kitaibaraki-shi**
**Ibaraki 319-1535 (JP)**

• **USHIJIMA Shinnji**
**Kitaibaraki-shi**
**Ibaraki 319-1535 (JP)**
• **CAO Zhidan**
**Otsu**
**Shiga 520-2141 (JP)**
• **HARADA Masaru**
**Otsu**
**Shiga 520-2141 (JP)**
• **HATTORI Yasuhiro**
**Tokyo 102-8362 (JP)**

(74) Representative: **Prüfer & Partner mbB**
**Patentanwälte · Rechtsanwälte**
**Sohnckestraße 12**
**81479 München (DE)**

(56) References cited:
**WO-A1-2007/142318    JP-A- 2000 309 029
JP-A- 2001 329 457     JP-A- 2001 329 457
JP-A- 2007 232 208     JP-A- 2011 117 605
JP-A- 2011 117 605**

**Description**

Technical Field

The present invention relates to a resin belt, and particularly relates to a resin belt having excellent adhesive strength between a thermoplastic resin of a belt body and a woven fabric, and particularly having high peel strength in the longitudinal direction of the belt to provide improved durability of the resin belt, thereby having improved abrasion resistance, low friction property, and formability.

Background Art

Conventional examples of a technique of preventing abrasion of a belt and a timing belt and the like that are used for conveyance systems such as production, conveyance, and assembly lines of a factory include (1) a technique of applying a lubricant such as an oil or a wax, (2) a technique of integrally molding a cloth made of a material having good low friction property such as nylon on a sliding surface (a teeth surface, a back face), and (3) a technique of using a low friction material as a material forming a belt body.

The technique of applying the lubricant in the above (1) provides an initial effect, but the effect decreases as the time elapses, so that the maintenance of periodically reapplying a lubricant is required, which is not preferable. Furthermore, the oil or the wax itself cannot be used in some cases depending on the usage purposes of a belt, and objects conveyed by the belt, which results in lack of versatility.

In the technique of stretching the nylon cloth in the above (2) and the technique of using the low friction material for the belt body in the above (3), an exceptionally large effect cannot be expected in many cases when the belt slides at a high speed and a high load.

Document List

Patent Literature

Patent Literature 1: Japanese Patent Application Publication No. 55-115643 Document JP2011117605 discloses a similar resin belt.

Summary of Invention

Technical Problem

For this reason, a belt having excellent abrasion resistance and excellent low friction property when the belt slides at a high speed and a high load is desired to be developed.

Patent Literature 1 discloses a timing belt cover cloth made of a fluorine resin fiber and a thermoplastic synthetic resin fiber, and a belt using the cover cloth. As described in Patent Literature 1, a polytetrafluoroethylene fiber having good heat resistance and chemical resistance and a low friction coefficient is used for only the surface of the cover cloth, and a thermoplastic synthetic fiber such as a polyamide fiber having good adhesiveness with a rubber is used for an adhesion surface between the cover cloth and the rubber.

The technique contributes to adhesiveness between a rubber belt and a woven fabric, but adhesive strength between the belt body and the woven fabric is not sufficient, so that improvement in peel strength is desired.

Then, it is an object of the present invention to provide a resin belt having excellent adhesive strength between a belt body and a woven fabric, and particularly having remarkably improved peel strength in the longitudinal direction of the belt.

Another object of the present invention will become apparent from the following description.

Solution to Problem

The objects are achieved by the invention according to the claims.

Effects of Invention

According to the present invention, there can be provided a resin belt having excellent adhesive strength between a belt body and a woven fabric, and particularly having remarkably improved peel strength in the longitudinal direction of the belt.

According to the present invention, there can be provided a resin belt having excellent abrasion resistance, excellent low friction property when the belt slides at a high speed and a high load, and excellent formability that can be applied to extrusion.

Brief Description of Drawings

[Fig. 1] A perspective view of an essential part showing an example of a resin belt of the present invention.
[Fig. 2] (a) A view showing a mixed state of fibers of a plain weave fabric, and (b) a weave repeat diagram of a plain weave fabric for illustrating the exposure percentage of a fluorine resin fiber.

Description of Embodiments

Hereinafter, an embodiment of the present invention will be described with reference to the drawings.

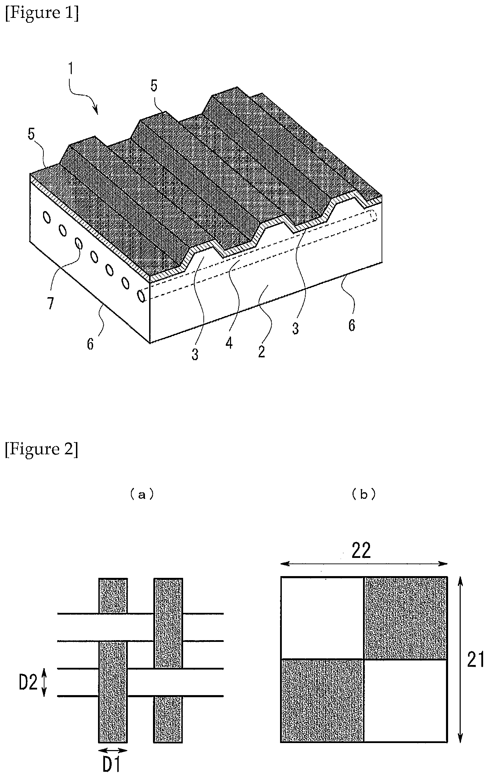

Fig. 1 is a perspective view of an essential part showing an example of a resin belt of the present invention.
In Fig. 1, a resin belt 1 includes teeth 3 provided on the side of the running surface of a belt body 2. Tooth bottoms 4 are formed on each of both sides of the teeth 3. A cloth 5 is provided on the surfaces of the teeth 3 and tooth bottoms 4 such that the surfaces thereof are covered with the cloth 5.

The belt body 2 is not particularly limited as long as it is an industrial belt used as a timing belt in production, conveyance, and assembly lines and the like, and for example, a flexural belt and a joint belt and the like can be used.

The teeth 3 and the tooth bottom 4 are alternately formed, and are configured to mesh with a toothed pulley along a longitudinal direction on the side of a running surface. The teeth 3 and the tooth bottom 4 mesh with teeth of the pulley to provide transmission, whereby exact synchronous transmission can be provided as in a chain or a gear.

Each of teeth 3 has a trapezoidal shape in cross section and an arc shape in cross section, for example, but the shape of the teeth 3 is not necessarily limited thereto.

The teeth 3 having a trapezoidal shape in cross section may be of, for example, an MXL type, XL type, L type, H type, or XH type described in JIS K6372, JIS K6373, ISO 5296-1, or ISO 5296-2, or a T2.5 type, T5 type, T10 type, or T20 type described in DIN7721. Alternatively, the teeth 3 may have an AT type special trapezoidal shape.

The teeth 3 having an arc shape in cross section may be of an H type, an S type, or a P type described in JIS B1857-1 and ISO 13050, for example. Alternatively, the teeth 3 may have an MA type arc shape.

An interval (a distance between the center of one of teeth and the center of one of teeth adjacent thereto) between the teeth 3, 3 ... adjacent to each other in the longitudinal direction is not limited, and it is, for example, about 5 to 30 mm.

It is preferable that a portion including a back face part (outer peripheral surface) 6 and the plurality of teeth 3 on the side of the running surface in the belt body 2 is integrally formed by extrusion.

The belt body 2 including the teeth 3 and the tooth bottom 4 is made of a thermoplastic resin. The thermoplastic resin is not particularly limited, and for example, a diene rubber, an olefin rubber, an acrylic rubber, a fluorine rubber, a silicone rubber, and a urethane rubber and the like can be illustrated. A material forming the belt body 2 can be appropriately selected depending on use conditions, but among these, polyurethane can be preferably used from the viewpoint of simultaneously achieving adhesiveness with a woven fabric, abrasion resistance, and formability.

Core wires 7 can be buried below the teeth of the belt body 2. As the core wire 7, fine wires made of metallic materials such as a steel wire and stainless steel wire, and fine wires made of fiber materials such as an aramid fiber, a glass fiber, a carbon fiber, a polyamide fiber, a polyester fiber, or a PBO (polyparaphenylene benzoxazole) fiber can be used, and these fibers may be used singly or in combinations of two or more. As the core wire 7, a twisted wire and the like can also be used, which is prepared by twisting a material obtained by combining any of the fine wires made of metallic materials and the fine wires made of fiber materials. The number of the core wires 7 to be buried and a method for burying the core wires 7 are not particularly limited.

The running surface (surface meshing with the pulley) of the belt body 2 is covered with the cloth 5. In the cloth 5, a thermoplastic synthetic resin fiber is used as a warp yarn, and a fluorine resin fiber is used as a weft yarn.

That is, in the present embodiment, a cloth having excellent adhesiveness is obtained by weaving a thermoplastic synthetic resin fiber used as a warp yarn in a longitudinal direction (lengthwise direction) and a fluorine resin fiber used as a weft yarn in a width direction (lateral direction).

In the present invention, crimp of the thermoplastic synthetic resin fiber used in the longitudinal direction of the belt is greater than crimp of the fluorine resin fiber used in the width direction of the belt.

The crimp in the present invention can be measured by the method according to JIS L1096-2010.

For example, when the cloth is caused to tightly adhere to the belt body for integral molding in the case where the cloth and the teeth of the belt body are bonded to each other, the thermoplastic resin forming the belt body soaks into a clearance of the cloth. The soak of the resin provides an anchor effect to provide improved adhesive strength between the resin and the cloth. As a result, peel strength in the longitudinal direction of the belt is improved to provide increased durability of the belt.

When the crimp of the thermoplastic synthetic resin fiber used in the longitudinal direction of the belt is smaller than crimp of the fluorine resin fiber used in the width direction of the belt, the adhesive strength between the resin and the cloth is decreased, and as a result, the peel strength in the longitudinal direction of the belt is decreased to cause decreased durability of the belt.

A preferred aspect of the present invention is, when the teeth 3 is covered with the cloth 5, the percentage of the fluorine resin fiber exposed on a side of a cloth surface (a side of a sliding surface with the pulley) in the cloth 5 is 50% or more per unit area, and the percentage of the fluorine resin fiber exposed on a side of a bonded surface with the teeth 3 (a side of an adhesion surface with the teeth surface) is 50% or less per unit area.

This makes it possible to secure sufficient followability (elongation properties) with respect to the shape of the teeth on the side of the bonded surface with the teeth, and improve abrasion resistance and low friction property.

When the percentage of the fluorine resin fiber exposed on the side of the cloth surface (the side of the sliding surface with the pulley) is less than 50% per unit area, abrasion resistance and low friction property are poor. Abnormal noise is apt to occur when the belt slides with the pulley.

When the percentage of the fluorine resin fiber exposed on the side of the bonded surface with the teeth 3 (the side of the adhesion surface with the teeth surface) exceeds 50% per unit area, adhesiveness with the belt body is poor, so that peeling occurs between the resin of the belt body and the cloth while the belt is operated.

In the present invention, the percentage of the fluorine resin fiber to be exposed means the percentage of an area of a portion in which the fluorine resin fiber floats in the surface. The portion is shown by a white cell in the weave repeat diagram of the cloth. Here, the weave repeat of a woven fabric means a minimum repetition unit forming the woven fabric. In the weave repeat diagram, a place in which a warp yarn floats in the surface is represented by a crepe pattern, and a place in which a weft yarn floats in the surface is represented by a white cell.

For example, in the case of a plain weave fabric, the weave repeat diagram is expressed by two warp yarns and two weft yarns as shown in Fig. 2(b). As shown in Fig. 2(a), when the projected length of diameters of warp and weft yarns are respectively taken as D1 and D2 in an actual plain weave fabric, a clearance is present between the yarns. When the cloth slides, a resin component forming the yarn is made into a coating by a frictional force and frictional heat to fill the clearance between the yarns with the coating. The percentage of the area of a portion in which the fluorine resin fiber floats in the surface in the weave repeat diagram shown in Fig. 2(b) is taken as an exposure percentage.

When the yarn densities of the warp and weft yarns are respectively taken as n1 (warp yarns/inch (2.54 cm)) and n2 (weft yarns/inch (2.54 cm)) in the weave repeat diagram of Fig. 2(b), lengths 21 and 22 of the weave repeat diagram of the woven fabric in lengthwise (warp) and lateral (weft) directions are respectively set to (2.54 × 2)/n2 (cm) and (2.54 × 2)/n1 (cm). The overall area S of the weave repeat diagram of the woven fabric is

$$S \text{ (cm}^2) = \{(2.54 \times 2)/n2\} \times \{(2.54 \times 2)/n1\}$$
$$= 4 \times \{(2.54/n2) \times (2.54/n1)\}.$$

As previously described, the projected length of diameters of the warp and weft yarns forming the woven fabric are respectively D1 and D2, and the clearance is present between the yarns. Assuming that the sliding makes the resin forming each fiber into a coating to equally fill the clearance between the yarns with the coating, areas S1 and S2 of the warp and weft yarns exposed in the surface of the cloth respectively correspond to an area of a crepe pattern portion and an area of a white portion in Fig. 2(b). That is, the areas S1 and S2 are as follows.

$$S1 = 2 \times \{(2.54/n2) \times (2.54/n1)\}$$

$$S2 = 2 \times \{(2.54/n2) \times (2.54/n1)\}$$

Since the projected area of the weave repeat diagram of the woven fabric is S, the percentage P (%) of the fluorine resin fiber exposed in the surface of the cloth when the fluorine resin fiber is used only for the weft yarn is as follows.

$$P \text{ (%)} = (S2/S) \times 100$$
$$= 50\%$$

The percentage of the fluorine resin fiber exposed in the surface of the cloth can be adjusted by changing the yarn densities and cloth constructions of the fluorine resin fiber and thermoplastic resin fiber.

The percentage of the fluorine resin fiber according to the present invention is not affected by the density of the yarns forming the woven fabric. However, for example, as the fineness of the forming yarns is greater, the thickness of the woven fabric is greater, and the thickness of a coating formed during sliding is greater, whereby the durability is further improved. Meanwhile, if the fineness of the yarns is deceased, the cloth is likely to be elongated by a small tensile force. The fineness of the fibers forming the woven fabric can individually designed in consideration of the properties.

The thermoplastic synthetic resin fiber is not particularly limited, and polyolefin fibers composed of polyethylene and polypropylene and the like, polyester fibers composed of PET and the like, and polyamide fibers composed of nylon and the like can be exemplified. Among these, nylon can be preferably used from the viewpoints of fatigue resistance, tensile strength, and elasticity and the like.

Furthermore, the cloth obtained by weaving the thermoplastic synthetic resin fiber obtained by the method preferably has a tensile elongation of 20% or more and 60% or less in a warp direction. The tensile elongation of the cloth in the warp direction according to the present invention means a degree of elongation (%) of the cloth in the warp direction until a load of 5 N/3 cm is applied in the warp direction when the cloth is elongated in the warp direction under conditions of a sample width of 3 cm, a distance between chucks of 150 mm, and a tensile speed of 200 mm/min based on JIS 1096 method (2010), and is taken as an average value of values obtained by measuring five samples extracted from different places of the cloth. This is because the cloth is elongated to the length of the outline (ridge line) of the teeth 3 when the teeth surface of the teeth 3 is covered with the cloth, so that an elongation rate required therefor is achieved.

The required elongation rate is, for example, about 20 to 45% in the case of the above-mentioned trapezoidal shape, and about 40 to 55% in the case of the above-mentioned arc shape.

Therefore, the tensile elongation of the cloth in the warp direction is preferably within the above range.

As the fluorine resin fiber, any of a trifluoride resin, a tetrafluoride resin, and a hexafluoride resin may be used, and from the viewpoints of abrasion resistance, heat resistance, and chemical resistance and the like, a tetrafluoroethylene resin is preferable.

Examples of the tetrafluoroethylene resin include a tetrafluoroethylene polymer, or a copolymer of tetrafluoroethylene and another monomer. Specific examples thereof include polytetrafluoroethylene (PTFE), a tetrafluoroethylene-hexafluoropropylene copolymer (FEP), a tetrafluoroethylene-perfluoroalkoxy group copolymer (PFA), and a tetrafluoroethylene-olefin copolymer (ETFE). These may be used alone or in a mixture of two or more.

In particular, polytetrafluoroethylene (PTFE) can be preferably used. However, a mixture of PTFE with polyurethane is excluded.

The fiber forms of the thermoplastic synthetic resin fiber and fluorine resin fiber are not particularly limited. The fiber forms may be any of a filament yarn or a spun yarn, may be a twisted yarn of fibers having an independent composition, or may be a mixed yarn or a blended yarn. The average fiber diameter of each fiber is not also particularly limited.

The weaving configuration (weave structure) of the cloth is not particularly limited as long as the percentage of the fluorine resin fiber exposed in each surface can be set as described above, and can be selected from, for example, plain weave, twill weave (twill), sateen weave (satin weave, satin), and change structures thereof.

[Formation Method]

A method for manufacturing a resin belt of the present invention is not particularly limited. For example, by stacking a cloth 5, core wires 7, and a thermoplastic resin forming a belt body 2 in order on a molding die, and vulcanizing the resin under moist heat at 150°C or higher under increased pressure, the resin belt can be formed.

In the above description, one aspect in which the teeth of the belt body is covered with the cloth is described, but the present invention is not limited thereto. For example, the back face part and the teeth may be covered with the cloth.

According to the present invention, there can be provided the resin belt having excellent abrasion resistance, excellent low friction property when the belt slides at a high speed and a high load, and excellent formability that can be applied to extrusion.

Furthermore, the present invention provides good low friction property when the belt slides with a mating part with the pulley and a guide rail even in a high load state when the belt is used for driving and conveying to provide an excellent abrasion resistance specification, and can suppress the occurrence of abnormal noise.

Conventionally, a nylon cloth is generally used for the back face part of the belt (the surface opposite to the teeth), but in the resin belt of the present invention, the same cloth as that of the running surface (teeth surface) can be used for the back face part (the surface opposite to the teeth). This makes it possible to expect improvement in low friction property and abrasion resistance when a conveyed object is accumulated in the back face part of the belt in a conveying application. From the above, the durability of the belt in use is improved, whereby maintenance costs can be reduced, and the belt can be expected to be used in various applications.

List of Reference Signs

1 resin belt
2 belt body
3 teeth
4 tooth bottom
5 cloth
6 back face part
7 core wire
21 length of woven fabric in lengthwise (warp) direction in weave repeat diagram
22 length of woven fabric in lateral (weft) direction in weave repeat diagram
D1 diameter of warp yarn
D2 diameter of weft yarn

**Claims**

1. A resin belt comprising:

    a plurality of teeth disposed at predetermined intervals along a longitudinal direction of the belt on a running surface of a belt body made of a thermoplastic resin; and
    a cloth covering the teeth,
    **characterized in that**:

        the cloth is a woven cloth obtained by weaving a thermoplastic synthetic resin fiber used as a warp yarn in the longitudinal direction of the belt and a fluorine resin fiber used as a weft yarn in a width direction of the belt; and
        a crimp of the thermoplastic synthetic resin fiber used in the longitudinal direction of the belt is greater than a crimp of the fluorine resin fiber used in the width direction of the belt.

**2.** The resin belt according to claim 1, **characterized in that** a percentage of the fluorine resin fiber exposed on a side of a cloth surface of the teeth is 50% or more per unit area, and a percentage of the fluorine resin fiber exposed on a side of a bonded surface with the belt body is 50% or less per unit area.

**3.** The resin belt according to claim 1 or 2, **characterized in that** the belt body is made of polyurethane.

**4.** The resin belt according to any one of claims 1 to 3, **characterized in that** the thermoplastic synthetic resin fiber is made of a nylon fiber and the fluorine resin fiber is made of a tetrafluoroethylene-based resin fiber.

**5.** The resin belt according to any one of claims 1 to 4, **characterized in that** a tensile elongation of the cloth in a warp direction is 20% or more and 60% or less.

**6.** The resin belt according to any one of claims 1 to 5, **characterized in that** the belt body and the cloth are integrally formed with each other.

**7.** The resin belt according to any one of claims 1 to 6, **characterized in that** the cloth is integrally formed with a teeth surface part of an MXL type, XL type, L type, H type, or XH type of a trapezoidal-shaped belt described in JIS K6372, JIS K6373, ISO 5296-1, or ISO 5296-2, or the cloth is integrally formed with a teeth surface part of a T2.5 type, T5 type, T10 type, or T20 type of a trapezoidal-shaped belt described in DIN7721.

**8.** The resin belt according to any one of claims 1 to 6, **characterized in that** the cloth is integrally formed with an AT type teeth surface part of a special trapezoidal-shaped belt.

**9.** The resin belt according to any one of claims 1 to 6, **characterized in that** the cloth is integrally formed with a teeth surface part of an H type, S type, or P type of an arc-shaped belt described in JIS B1857-1 or ISO 13050.

**10.** The resin belt according to any one of claims 1 to 6, **characterized in that** the cloth is integrally formed with an MA type teeth surface part of an arc-shaped belt.

**11.** The resin belt according to any one of claims 1 to 10, **characterized in that** the cloth is integrally formed with a back face part of the belt.

**12.** The resin belt according to any one of claims 1 to 10, **characterized in that** the cloth is integrally formed with a back face part and a teeth surface part of the belt.

**13.** The resin belt according to any one of claims 1 to 12, **characterized in that** the belt body contains, as a core wire, at least one selected from a steel wire, a stainless steel wire, an aramid fiber, a glass fiber, a carbon fiber, a nylon fiber, a polyester fiber, or a polyparaphenylene benzoxazole (PBO) fiber.

**Patentansprüche**

**1.** Harzband, umfassend:

eine Vielzahl von Zähnen, die in vorbestimmten Abständen entlang einer Längsrichtung des Bands auf einer Lauffläche eines aus einem thermoplastischen Harz hergestellten Bandkörpers angeordnet sind; und
ein Gewebe, das die Zähne bedeckt, **dadurch gekennzeichnet, dass**:

das Gewebe ein gewebtes Gewebe ist, das erhalten wird durch Weben einer thermoplastischen Kunstharzfaser, die als Kettgarn in der Längsrichtung des Bandes verwendet ist, und einer Fluorharzfaser, die als Schussgarn in einer Breitenrichtung des Bands verwendet ist; und
eine Kräuselung der thermoplastischen Kunstharzfaser, die in der Längsrichtung des Bandes verwendet ist, größer ist als eine Kräuselung der Fluorharzfaser, die in der Breitenrichtung des Bandes verwendet ist.

**2.** Harzband gemäß Anspruch 1, **dadurch gekennzeichnet, dass** ein Anteil der Fluorharzfaser, die auf einer Seite einer Gewebeoberfläche der Zähne freiliegt, 50 % oder mehr pro Flächeneinheit beträgt, und ein Anteil der Fluorharzfaser, die auf einer Seite einer mit dem Bandkörper verbundenen Oberfläche freiliegt, 50 % oder weniger pro Flächeneinheit beträgt.

**3.** Harzband gemäß Anspruch 1 oder 2, **dadurch gekennzeichnet, dass** der Bandkörper aus Polyurethan gebildet ist.

**4.** Harzband gemäß einem der Ansprüche 1 bis 3, **dadurch gekennzeichnet, dass** die thermoplastische Kunstharzfaser aus einer Nylonfaser und die Fluorharzfaser aus einer Harzfaser hergestellt ist, die auf Tetrafluorethylen basiert.

**5.** Harzband gemäß einem der Ansprüche 1 bis 4, **dadurch gekennzeichnet, dass** die Zugdehnung des Gewebes in einer Kettrichtung 20% oder mehr und 60% oder weniger beträgt.

**6.** Harzband gemäß einem der Ansprüche 1 bis 5, **dadurch gekennzeichnet, dass** der Bandkörper und das Gewebe einstückig miteinander ausgebildet sind.

**7.** Harzband nach einem der Ansprüche 1 bis 6, **dadurch gekennzeichnet, dass** das Gewebe einstückig mit einem Zahnoberflächenteil vom MXL-Typ, XL-Typ, L-Typ, H-Typ oder XH-Typ eines Bandes mit Trapezform ausgebildet ist, der in JIS K6372, JIS K6373, ISO 5296-1 oder ISO 5296-2 beschrieben ist, oder
das Gewebe einstückig mit einem Zahnoberflächenteil vom T2,5- Typ, T5- Typ, T10- Typ oder T20-Typ eines Bandes mit Trapezform ausgebildet ist, der in DIN7721 beschrieben ist.

**8.** Harzband nach einem der Ansprüche 1 bis 6, **dadurch gekennzeichnet, dass** das Gewebe einstückig mit einem Zahnoberflächenteil vom AT-Typ eines Bandes mit besonderer mit Trapezform ausgebildet ist.

**9.** Harzband nach einem der Ansprüche 1 bis 6, **dadurch gekennzeichnet, dass** das Gewebe einstückig mit einem Zahnoberflächenteil vom H-Typ, S-Typ oder P-Typ eines Bandes mit Bogenform ausgebildet ist, der in JIS B1857-1 oder ISO 13050 beschrieben ist.

**10.** Harzband nach einem der Ansprüche 1 bis 6, **dadurch gekennzeichnet, dass** das Gewebe einstückig mit einem Zahnoberflächenteil vom MA-Typ eines Bandes mit Bogenform ausgebildet ist.

**11.** Harzband nach einem der Ansprüche 1 bis 10, **dadurch gekennzeichnet, dass** das Gewebe einstückig mit einem Rückseitenteil des Bandes ausgebildet ist.

**12.** Harzband nach einem der Ansprüche 1 bis 10, **dadurch gekennzeichnet, dass** das Gewebe einstückig mit einem Rückseitenteil und mit einem Zahnoberflächenteil des Bandes ausgebildet ist.

**13.** Harzband nach einem der Ansprüche 1 bis 12, **dadurch gekennzeichnet, dass** der Bandkörper als Kerndraht mindestens eine Faser enthält, die aus einem Stahldraht, einem Edelstahldraht, einer Aramidfaser, einer Glasfaser, einer Kohlenstofffaser, einer Nylonfaser, einer Polyesterfaser oder einer Poly-Paraphenylen-Benzoxazol) (PBO)-Faser ausgewählt ist.

**Revendications**

**1.** Courroie en résine comprenant :

une pluralité de dents disposées à intervalles prédéterminés suivant une direction longitudinale de la courroie sur une surface utile d'un corps de courroie réalisé en une résine thermoplastique ; et
un tissu recouvrant les dents,
**caractérisée en ce que** :

le tissu est un tissu tissé obtenu en tissant une fibre de résine synthétique thermoplastique utilisée comme fil de chaîne dans la direction longitudinale de la courroie et une fibre de résine fluorée utilisée comme fil de trame dans une direction transversale de la courroie ; et
une ondulation de la fibre de résine synthétique thermoplastique utilisée dans la direction longitudinale de la courroie est supérieure à une ondulation de la fibre de résine fluorée utilisée dans la direction transversale de la courroie.

**2.** Courroie en résine selon la revendication 1, **caractérisée en ce qu'**un pourcentage de la fibre de résine fluorée exposée sur un côté d'une surface de tissu des dents est supérieur ou égal à 50% par unité de surface, et un pourcentage de la fibre de résine fluorée exposée sur un côté d'une surface soudée avec le corps de courroie est inférieur ou égal à 50% par unité de surface.

**3.** Courroie en résine selon la revendication 1 ou 2, **caractérisée en ce que** le corps de courroie est réalisé en polyuréthane.

**4.** Courroie en résine selon l'une quelconque des revendications 1 à 3, **caractérisée en ce que** la fibre de résine synthétique thermoplastique est à base d'une fibre de nylon et la fibre de résine fluorée est d'une fibre de résine à base de tétrafluoro-éthylène.

**5.** Courroie en résine selon l'une quelconque des revendications 1 à 4, **caractérisée en ce qu'**un allongement en traction du tissu dans une direction de chaîne est supérieur ou égal à 20% et inférieur ou égal à 60%.

**6.** Courroie en résine selon l'une quelconque des revendications 1 à 5, **caractérisée en ce que** le corps de courroie et le tissu sont formés de manière unitaire l'un avec l'autre.

**7.** Courroie en résine selon l'une quelconque des revendications 1 à 6, **caractérisée en ce que** le tissu est formé de manière unitaire avec une partie de surface dentée suivant l'un du type MXL, du type XL, du type L, du type H ou du type XH d'une courroie de forme trapézoïdale décrite dans JIS K6372, JIS K6373, ISO 5296-1 ou ISO 5296-2, ou
le tissu est formé de manière unitaire avec une partie de surface dentée suivant l'un du type T2.5, du type T5, du type T10 ou du type T20 d'une courroie de forme trapézoïdale décrite dans DIN7721.

8.  Courroie en résine selon l'une quelconque des revendications 1 à 6, **caractérisée en ce que** le tissu est formé de manière unitaire avec une partie de surface dentée du type AT d'une courroie de forme trapézoïdale spéciale.

9.  Courroie en résine selon l'une quelconque des revendications 1 à 6, **caractérisée en ce que** le tissu est formé de manière unitaire avec une partie de surface dentée de l'un du type H, du type S ou du type P d'une courroie en forme d'arc décrite dans JIS B1857-1 ou ISO 13050.

10. Courroie en résine selon l'une quelconque des revendications 1 à 6, **caractérisée en ce que** le tissu est formé de manière unitaire avec une partie de surface dentée d'un type MA d'une courroie en forme d'arc.

11. Courroie en résine selon l'une quelconque des revendications 1 à 10, **caractérisée en ce que** le tissu est formé de manière unitaire avec une partie de face arrière de la courroie.

12. Courroie en résine selon l'une quelconque des revendications 1 à 10, **caractérisée en ce que** le tissu est formé de manière unitaire avec une partie de face arrière et une partie de surface dentée de la courroie.

13. Courroie en résine selon l'une quelconque des revendications 1 à 12, **caractérisée en ce que** le corps de courroie contient, en tant que fil d'âme, au moins l'un sélectionné parmi un fil d'acier, un fil d'acier inoxydable, une fibre aramide, une fibre de verre, une fibre de carbone, une fibre de nylon, une fibre de polyester, ou une fibre de polyparaphénylène benzoxazole (PBO).

[Figure 1]

[Figure 2]

(a)                              (b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55115643 A

- JP 2011117605 B